# FASCICULE DE BREVET EUROPEEN

(11) **EP 4 025 413 B1**
(45) Date de publication et mention de la délivrance du brevet: **27.09.2023**
(21) Numéro de dépôt: 20780247.1
(22) Date de dépôt: 31.08.2020
(51) Int. Cl.: B29C 70/38

(54) **TETE D'APPLICATION DE FIBRES AVEC ROULEAU A ANNEAUX RIGIDES**
FASERAPPLIKATIONSKOPF MIT WALZE MIT STARREN RINGEN
FIBRE APPLICATION HEAD WITH ROLLER WITH RIGID RINGS

(30) Priorité: 04.09.2019 FR 1909655
(43) Date de publication de la demande: 13.07.2022
(73) Titulaire: Coriolis Group, 56530 Quéven (FR)
(72) Inventeur: HAMLYN, Alexander, 56270 Ploemeur (FR)
(86) Numéro de dépôt international: PCT/FR2020/000229
(87) Numéro de publication internationale: WO 2021/044083

(56) Documents cités:
- FR-A1- 3 044 255
- US-A- 2 464 020
- US-A1- 2007 044 922

## Description

La présente invention concerne une tête d'application de fibres pour une machine d'application de fibres pour la réalisation de pièces en matériau composite, et plus particulièrement une tête dite de placement de fibres équipée d'un rouleau d'application particulier. La présente invention concerne également un procédé de fabrication de pièces en matériau composite au moyen d'une tête d'application correspondante.

Il est connu des machines d'application de fibres, appelées couramment machines de placement de fibres, pour l'application au contact sur un outillage de drapage, tel qu'un moule mâle ou femelle, d'une bande large formée de plusieurs fibres plates continues, de type rubans, sèches ou imprégnées de résine thermodurcissable ou thermoplastique, notamment des fibres de carbone constituées d'une multitude de fils ou filaments de carbone.

Ces machines sont utilisées pour réaliser des préformes formées de plusieurs plis superposés, chaque pli étant formé par drapage sur le moule d'une ou plusieurs bandes côte à côte. Dans le cas d'un drapage de fibres pré-imprégnées de résine thermoplastique ou thermodurcissable, classiquement en une quantité d'au moins 40% en poids, la préforme pré-imprégnée obtenue après drapage est durcie ou polymérisée par passage dans un four pour obtenir une pièce en matériau composite. Dans le cas de fibres dites sèches, non pré-imprégnées de résines, les fibres comprennent une quantité réduite de résine dite de liaison, appelée également liant, généralement une résine thermoplastique, en une quantité inférieure ou égale à 5% en poids, pour conférer un caractère collant aux fibres lors du drapage. Après drapage, la préforme dite sèche est soumise à une opération d'injection ou d'infusion de résine avant l'étape de durcissement.

Ces machines, telles que décrites dans le document brevet WO2006/092514, comprennent classiquement une tête d'application de fibres, un système de déplacement de ladite tête, des moyens de stockage de fibres, et des moyens d'acheminement des fibres pour acheminer les fibres desdits moyens de stockage vers la tête. La tête comprend classiquement un rouleau d'application, également appelé rouleau de compactage, destiné à venir en contact contre le moule pour appliquer la bande, et des moyens de guidage des fibres sur ledit rouleau d'application.

La tête comprend en outre généralement un système de chauffage pour chauffer les fibres. Le rouleau de compactage presse la bande de fibres contre la surface d'application du moule, ou contre la ou les bandes de fibres précédemment déposées, afin de faciliter l'adhésion des bandes déposées entre elles, ainsi que pour évacuer progressivement l'air emprisonné entre les bandes déposées. Le système de chauffage assure un chauffage de la bande de fibres à appliquer, et/ou du moule ou des bandes déjà appliquées en amont du rouleau de compactage, juste avant le compactage de la bande, afin d'au moins ramollir la résine de pré-imprégnation ou la résine de liaison, et ainsi favoriser l'adhésion des bandes entre elles.

Dans le cas de résines thermodurcissables, les fibres pré-imprégnées sont simplement chauffées pour les ramollir, classiquement à des températures de l'ordre de 40°C. Le système de chauffage comprend classiquement un système de chauffage infrarouge comprenant une ou plusieurs lampes infrarouges.

Dans le cas de résines thermoplastiques, les fibres pré-imprégnées ou munies d'un liant doivent être chauffées à des températures plus élevées, au moins jusqu'à la température de fusion de la résine, soit de l'ordre de 200 °C pour des résines de type nylon, et jusqu'à environ 400°C pour des résines de type PEEK.

Pour atteindre ces températures plus élevées, il a été proposé des systèmes de torche à air chaud, et plus récemment des systèmes de chauffage de type laser pour obtenir un chauffage précis et concentré. En raison des températures de chauffage élevées, les têtes de placement de fibres sont classiquement équipées de rouleaux de compactage métalliques, résistants à la chaleur, qui peuvent en outre être refroidis par l'intérieur via un circuit d'eau. Pour pouvoir s'adapter au profil de la surface d'application, il a été proposé, notamment dans US2007/0044922, des rouleaux de compactage métalliques segmentés, comprenant plusieurs segments de rouleaux indépendants montés côte à côte sur un même axe, deux bagues étant montées sur l'axe pour bloquer en translation l'empilement d'anneaux. Chaque segment est déplaçable radialement et de manière indépendante, et est sollicité élastiquement contre la surface d'application par des moyens élastiques. Chaque segment comprend classiquement un anneau monté rotatif sur un support via des systèmes de roulement à bille, le support est monté sur un axe commun de manière mobile en translation. Les moyens élastiques, tels que des ressorts individuels ou une poche, intégrés dans le rouleau ou agissant sur les anneaux à l'opposé de la surface d'application, sollicitent les supports vers le bas. Ces rouleaux métalliques segmentés s'avèrent toutefois de structure et de mise en oeuvre complexes.

Des rouleaux souples formés à partir d'un élastomère dit haute température, incluant un stabilisant thermique, sont également utilisés. Ces rouleaux comprennent généralement une couche extérieure formée d'une gaine antiadhérente thermorétractée et collée sur un cylindre en matériau élastomère, tel que décrit dans les documents brevets FR 2948058 et FR 3009512. Pour les refroidir, il a été proposé d'équiper les têtes de placement d'un système de refroidissement apte à délivrer un flux d'air pour refroidir le rouleau par l'extérieur ou par l'intérieur, comme décrit dans le document brevet FR 2948058. Malgré ces systèmes de refroidissement, les rouleaux souples peuvent avoir tendance à se détériorer dans le cas de la mise en oeuvre de résines thermoplastiques. Suivant les températures de chauffage utilisées, la gaine anti-adhérente peut avoir tendance à se dégrader rapidement. Le chauffage laser peut avoir tendance à détériorer la colle utilisée pour le collage de la gaine et conduire à un désassemblage de la gaine et du cylindre en matériau souple. Par ailleurs, la couche de colle détériorée absorbe le rayonnement laser et peut monter à des températures importantes pouvant détériorer la gaine.

Il a également été proposée dans le document brevet FR 3 044 255 une couche extérieure métallique flexible, de faible épaisseur, formée d'un feuillard dont le maintien est assuré par collage. Ladite couche métallique sert d'écran au rayonnement thermique émis par le système de chauffage, et permet d'éviter une surchauffe du rouleau de compactage. Ladite couche métallique est flexible, de sorte que le rouleau puisse se déformer pour s'adapter à la surface de drapage et permettre le drapage avec un effort de compactage. Après compactage, le cylindre en matériau souple reprend sa forme d'origine et sollicite la couche métallique vers sa forme cylindrique. Comme précédemment, le collage peut avoir tendance à se détériorer, en raison des températures élevées et/ou en raison d'une oxydation de la couche métallique dans le temps. Par ailleurs, la capacité de déformation tridimensionnelle du feuillard de métallique ne permet pas d'utiliser un tel rouleau dans le cas de fortes variations de courbure de la surface d'application dans la longueur du rouleau.

US 2,264,020 décrit une machine de fabrication de pneus comprenant des rouleaux presseurs déformables pour appliquer un revêtement externe en caoutchouc sur des plis de tissu préalablement placés sur un tambour. Chaque rouleau déformable comprend une pluralité d'anneaux rigides indépendants, empilés côte à côte coaxialement un noyau en caoutchouc assemblé sur un tube central, le noyau étant en forme d'étoile avec des pointes en saillie sur lesquelles reposent les anneaux, chaque anneau est destiné à venir en appui contre le revêtement de caoutchouc, deux bagues montées sur le tube central, de part et d'autre du noyau, étant aptes à bloquer en translation l'empilement d'anneaux sur le noyau.

Le but de la présente invention est de proposer une solution visant à pallier au moins un des inconvénients précités, qui permet notamment la mise en oeuvre d'une grande variété de résines, tant thermodurcissables que thermoplastiques, avec un compactage sensiblement uniforme de la bande appliquée, et qui soit simple de conception et de réalisation.

A cet effet, la présente invention propose une tête d'application de fibres pour la réalisation de pièces en matériau composite, comprenant
- un système de compactage comprenant un rouleau de compactage, appelé également rouleau d'application, pour l'application d'une ou plusieurs fibres, en particulier d'une bande formée d'une ou plusieurs fibres plates sur une surface d'application, ledit rouleau de compactage comprenant un tube central rigide par lequel ledit rouleau est monté rotatif sur une structure support de la tête, et au moins une pièce cylindrique réalisée en un matériau souple, déformable élastiquement, assemblée coaxialement, directement ou indirectement, sur ledit tube central,
- et de préférence un système de chauffage apte à émettre un rayonnement thermique en direction de la ou des fibres, de préférence juste avant application par le rouleau d'application,
   caractérisée en ce ledit rouleau de compactage comprend en outre une pluralité d'anneaux rigides indépendants, de préférence identiques, empilés côte à côte, coaxialement, sur la pièce cylindrique, présentant chacun une surface cylindrique extérieure par laquelle chaque anneau est destiné à venir en appui contre la surface de drapage, deux bagues montées sur le tube central, de part et autre de la pièce cylindrique, étant aptes à bloquer en translation l'empilement d'anneaux sur la pièce cylindrique, et à maintenir lesdits anneaux les uns contre les autres par leurs surfaces latérales.

Selon l'invention, des anneaux indépendants sont montés sur une pièce cylindrique élastiquement déformable, de sorte que les anneaux soient aptes à se déplacer radialement indépendamment les uns des autres. Les bagues sont montées fixe en translation sur le tube central, et de préférence montées fixe en rotation sur le tube central, et présentent un diamètre extérieur inférieur au diamètre extérieur des anneaux. L'utilisation d'un rouleau muni de tels anneaux selon l'invention permet d'obtenir un rouleau de compactage thermiquement stable utilisable pour l'application de fibres à des températures élevées, notamment supérieure à 400°C, en particulier pour l'application de fibres imprégnées de résines thermoplastiques, sur des surfaces d'application non planes. Le rouleau de compactage s'avère simple de conception et de réalisation, avec des anneaux montés directement sur une pièce cylindrique élastiquement déformable, sans systèmes de roulement ou systèmes élastiques complexes. La tête selon l'invention équipée d'un tel rouleau offre la possibilité d'utiliser une grande variété de résines thermodurcissables ou thermoplastiques combinées à une grande variété de fibres, synthétiques ou naturelles, hybrides ou non, notamment des fibres couramment employées dans le domaine des composites, telles que les fibres de verre, les fibres de carbone, de quartz, et d'aramide.

Selon un mode de réalisation, chaque bague présente sur sa face latérale en vis en vis de la pièce cylindrique une nervure périphérique annulaire par laquelle la bague est en appui contre la surface latérale de l'anneau extérieur de l'empilement d'anneaux ou chaque bague présente un rebord périphérique annulaire par lequel la bague est en appui contre la surface latérale de l'anneau extérieur de l'empilement d'anneaux, ladite nervure ou ledit rebord définissant un renfoncement sur la face latérale de la bague dans lequel la pièce cylindrique est apte à s'étendre lorsque ladite pièce cylindrique s'écrase sous l'effet de l'effort de compactage. Selon un mode de réalisation, la pièce cylindrique présente une longueur supérieure à la longueur de l'empilement d'anneaux, la pièce cylindre s'étendant ainsi dans les renfoncements des bagues, la pièce cylindrique ayant un diamètre extérieur qui est inférieur au diamètre intérieur des nervures périphérique annulaire.

Selon un mode de réalisation, le rouleau de compactage comprend des anneaux métalliques, de préférence en acier, aluminium, laiton, cuivre, ou bronze. Les anneaux métalliques peuvent présenter, au moins sur leurs surfaces cylindriques extérieures un traitement anti-adhérent et/ou un traitement réfléchissant.

Selon un mode de réalisation, chaque anneau se présente sous forme d'une rondelle, de préférence plate, chaque anneau présente deux surfaces latérales opposées planes parallèles, avec un rapport largeur sur épaisseur supérieur à 1, de préférence supérieur à 2, la largeur étant définie comme étant la différence entre le diamètre extérieur et le diamètre intérieur de l'anneau, et l'épaisseur étant définie comme étant la distance entre les deux surfaces latérales opposées.

Selon un mode de réalisation, chaque anneau présente des arêtes vives entre sa surface cylindrique extérieure et ses surfaces latérales, afin de limiter le marquage des fibres déposées, et/ou chaque anneau présente des chanfreins ou arrondis reliant sa surface cylindrique intérieure et ses surfaces latérales opposées.

Selon un mode de réalisation ledit rouleau de compactage comprend une pièce cylindrique en un matériau élastomère, de préférence non expansé, par exemple un silicone ou un polyuréthane, présentant de préférence une dureté comprise entre 25 shore A et 90 shore A, de préférence d'au moins 40 shore A. Selon un mode de réalisation, la pièce cylindrique comprend des évidements, par exemple des évidements longitudinaux débouchant sur ses surfaces latérales et/ou des alvéoles, lesdits évidements et/ou alvéoles permettant d'augmenter la capacité de déformation de la pièce cylindrique.

Selon un autre mode de réalisation, le rouleau de compactage comprend une pièce cylindrique en mousse, par exemple un élastomère expansé tel qu'une mousse polyuréthane, présentant de préférence une densité comprise entre 200 kg/m³ et 500 kg/m³.

Selon un mode de réalisation, la pièce cylindrique est obtenue par moulage sur le tube central. Selon un autre mode de réalisation, la pièce cylindrique est obtenue séparément, par exemple par moulage dans un moule séparé, et est ensuite assemblée sur le tube central par emmanchement sur le tube central. Dans ce dernier mode, la pièce cylindrique peut être remplacée aisément en cas d'usure ou détérioration, et/ou lorsque l'utilisateur souhaite changer de dureté de pièce cylindrique.

Selon un mode de réalisation, la tête constitue une tête de placement de fibres comprenant des moyens de coupe et des moyens de réacheminement, et éventuellement de moyens de blocage de fibres. Selon un mode de réalisation la tête est utilisée pour effectuer une application de type enroulement filamentaire.

Selon un mode de réalisation, la tête comprend un système de chauffe de type laser, notamment des diodes laser, un laser YAG ou un laser à fibre, apte à émettre un faisceau laser en direction de la zone de contact entre le rouleau et une surface de drapage. En variante, le système de chauffage peut comprendre une ou plusieurs lampes infrarouges, ou un système de chauffage de type lampe flash, tel que décrit dans le document brevet WO2014/029969 ou WO2017/134453.

La présente invention a également pour objet un procédé de fabrication d'une pièce en matériau composite comprenant l'application de fibres continues sur une surface d'application, caractérisé en ce que l'application de fibres est réalisée au moyen d'une tête d'application de fibres telle que décrite précédemment, par déplacement relatif de la tête d'application par rapport à la surface de drapage selon des trajectoires de dépose, les fibres étant compactées lors de leur application au moyen dudit rouleau d'application.

Les fibres classiquement utilisées sont des fibres plates continues, appelées également mèches, généralement unidirectionnelles, et comprenant une multitude de filaments. Les fibres déposées peuvent être des fibres sèches ou des fibres pré-imprégnées de résine thermodurcissable ou thermoplastique. Les fibres présentent typiquement des largeurs de 1/8, 1/4 ou 1/2 pouces. Dans la présente, le terme «fibres » désigne également des fibres de plus grande largeur, supérieure à 1/2 pouce, classiquement appelée bande dans la technologie du placement.

Le procédé selon l'invention est particulièrement avantageux dans le cas de la réalisation de préformes sèches réalisées à partir de fibres sèches munies d'un liant et/ou de préformes thermoplastiques réalisées à partir de fibres pré-imprégnées de résine thermoplastique, nécessitant des températures de chauffage importante lors du drapage pour au moins atteindre le point de fusion du liant et/ou des résines thermoplastiques.

Dans le cas d'une préforme sèche, le procédé comprend en outre une étape d'imprégnation de résine dans la préforme sèche, par ajout d'une ou plusieurs résines d'imprégnation par infusion ou injection à la préforme sèche, et une étape de durcissement pour obtenir une pièce en matériau composite. Dans le cas d'une préforme thermoplastique, la préforme peut éventuellement être soumise à une étape de consolidation supplémentaire pour obtenir une pièce finale en matériau composite. Une consolidation in situ peut également être obtenue lors de l'application des fibres.

L'application de fibres peut être effectuée sur la surface d'application d'un outillage pour former une préforme, tel que décrit précédemment, par placement de fibre, placement de bande, et/ou bobinage. Selon un autre mode de réalisation, l'application de fibres est réalisée directement sur la surface d'application d'une pièce préfabriquée, pour renforcer cette pièce avec des renforts de fibres unidirectionnelles, la pièce préfabriquée étant par exemple une pièce obtenue par injection, moulage ou fabrication additive, à partir d'une ou plusieurs résines thermoplastiques et/ou thermodurcissables.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue schématique de côté d'une tête d'application de fibres selon l'invention, illustrant le rouleau de compactage et le système de chauffage ;
- la figure 2 est une vue schématique en perspective du rouleau de compactage de la figure 1 ;
- la figure 3 est une vue analogue à celle de la figure 2, avec un arraché partiel ;
- la figure 4 est une vue en coupe longitudinale du rouleau de compactage de la figure 2 ;
- la figure 5 est une vue du rouleau de compactage analogue à celle de la figure 4 lors de l'utilisation du rouleau de compactage sur une surface de drapage complexe ; et
- la figure 6 est une vue partielle agrandie de la figure 4 illustrant une section d'un anneau rigide du rouleau de compactage.

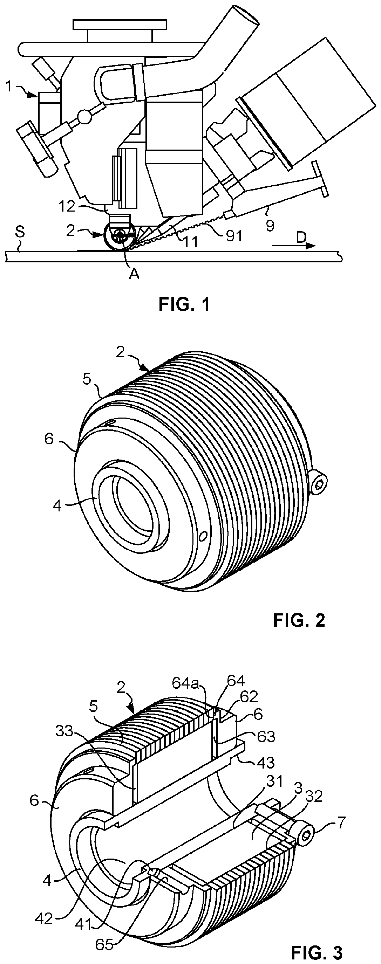

En référence à la figure 1, la tête d'application 1 comporte un rouleau de compactage 2 qui est monté rotatif autour d'un axe A sur une structure support 12 de la tête. La tête est prévue pour l'application d'une bande formée de plusieurs fibres disposées côte à côte. La tête est montée par ladite structure support 12 à l'extrémité d'un système de déplacement (non représentée), par exemple un poignet de robot. La tête comprend en outre un système de chauffage 9 monté également sur la structure support, en amont du rouleau par rapport à la direction d'avancement D de la tête d'application lors de l'application de la bande de fibres sur une surface d'application S. Le système de chauffage est par exemple un système de chauffage de type laser, dont le rayonnement est dirigé en direction de la bande, juste avant son compactage, ainsi que vers la ou les bandes déjà déposées. Tel qu'illustré à la figure 1, le rayonnement 91 est ainsi dirigé obliquement vers la zone de pincement ou zone de contact entre le rouleau d'application et la surface d'application, pour chauffer une section de bande disposée sur le rouleau, avant son compactage par ce dernier, ainsi que la surface d'application et/ou une ou plusieurs bandes préalablement appliquées. Dans le cas d'une machine de placement de fibres, la tête comprend des moyens de guidage 11 qui guident les fibres entrant dans la tête vers le rouleau de compactage 2 sous la forme d'une bande de fibres, les fibres de la bande étant disposées côte à côte de manière sensiblement jointives. Par déplacement de la tête par le robot, le rouleau de compactage est amené en contact avec la surface d'application d'un moule S pour appliquer la bande. Les fibres sont de préférence des fibres continues plates, de type mèches, pré-imprégnées d'une résine thermodurcissable ou d'une résine thermoplastique, ou des fibres sèches munies d'un liant. Le liant est sous forme de poudre et/ou d'un ou plusieurs voiles, de préférence de type thermoplastique.

En référence aux figures 2 à 6, le rouleau de compactage 2 d'axe A comprend une pièce ou corps cylindrique 3 en un matériau souple, élastiquement déformable par compression. La pièce cylindrique présente un passage central 31 cylindrique pour son assemblage sur un noyau support formé d'un tube central 4 rigide cylindrique, par exemple métallique, tel qu'en aluminium. La pièce cylindrique 3 et le tube central 4 sont coaxiaux et sont solidaires en rotation l'un de l'autre. La pièce cylindrique comprend ici une seule partie cylindrique avec une surface cylindrique 32 extérieure et deux surfaces latérales 33 planes parallèles.

Selon l'invention, la surface cylindrique 32 de la pièce cylindrique est recouverte d'une couche extérieure formée d'une pluralité de anneaux 5 identiques, emmanchés sur la pièce cylindrique et empilés les uns contre les autres.

Chaque anneau 5 présente une surface extérieure cylindrique 51 définissant le diamètre extérieur de l'anneau, une surface intérieure cylindrique 52 définissant le diamètre intérieur de l'anneau, et deux surfaces latérales 53 planes opposées. Les anneaux recouvrent l'ensemble de la surface cylindrique de la pièce cylindrique, la longueur de l'empilement correspondant sensiblement à la longueur de la pièce cylindrique. Les anneaux présentent un diamètre interne correspondant sensiblement au diamètre extérieur de la pièce cylindrique. Les anneaux sont emmanchés sur la pièce cylindrique et empilés côte à côte, à plat les uns contre les autres, en contact par leurs surface latérales 53 planes.

Chaque anneau présente une section sensiblement parallélépipédique, et se présente ici sous la forme d'une rondelle plane, avec une épaisseur E correspondant à la distance entre les deux surfaces latérales 53, et une largueur L correspondant à la distance entre la surface extérieure cylindrique 51 et la surface intérieure cylindrique 52, ou à la différence entre le diamètre interne et le diamètre externe de l'anneau, qui sont tels que le rapport L/E est supérieur à 1, de préférence supérieur à 2.

Le rouleau est équipé de deux bagues 6, de préférence métalliques, montées sur le tube central de part et d'autre de la pièce cylindrique pour bloquer l'empilement d'anneaux sur la pièce cylindrique. Chaque bague présente un passage central 61 pour son montage sur le tube central, et comprend une embase 62, de diamètre plus large par laquelle la bague vient contre la surface latérale en vis-à-vis du dernier anneau de l'empilement d'anneau, appelé anneau extérieur.

L'embase 62 présente sur sa face extérieure un rebord ou nervure annulaire périphérique 64 définissant un renfoncement 63 central cylindrique. Le diamètre intérieur de la nervure annulaire périphérique est égal ou supérieur au diamètre de la pièce cylindrique, ce dernier étant sensiblement égal au diamètre interne des anneaux. Le diamètre extérieur de la nervure annulaire périphérique, qui correspond au diamètre extérieur de l'embase, est inférieur au diamètre extérieur des anneaux. La bague est ainsi en contact uniquement avec la surface latérale de l'anneau extérieur par la surface extérieure annulaire 64a de la nervure annulaire périphérique. En variante, les bagues sont sans embase et présente un diamètre extérieur constant.

Chaque bague 6 est fixée sur le tube central au moyen de vis 7, par exemple trois vis, chacune vissée dans un trou radial 65 taraudé de la bague, et dont l'extrémité de vis vient se loger dans des empreintes 41 du tube central. En variante, chaque bague peut être vissée sur une extrémité filetée du tube central.

La pièce cylindrique 3 en matériau souple confère au rouleau de compactage une capacité d'écrasement qui permet au rouleau de compactage de s'adapter aux variations de courbure de la surface d'application et ainsi d'appliquer une pression sensiblement uniforme sur l'ensemble de la bande déposée. Le tube central rigide permet le montage rotatif du rouleau sur la structure support. Les anneaux, par les surfaces extérieures cylindriques 51 desquels le rouleau est en contact avec la bande, sert d'écran au rayonnement thermique émis par le système de chauffage, et permet d'éviter une surchauffe du rouleau de compactage.

A titre d'exemple, la pièce cylindrique est obtenue par moulage sur le tube central, l'assemblage de la pièce cylindrique sur le tube central étant obtenu lors du moulage, avec un éventuel traitement de surface approprié du tube central. Le montage du rouleau sur la tête peut être réalisé au moyen d'une tige axiale, montée dans le passage interne 42 du tube central 4 par l'intermédiaire de deux roulements à billes, et montée fixe en rotation sur la structure support 12 entre deux pièces support. Le tube central présentant avantageusement à chaque extrémité un premier lamage 43 pour le montage d'un roulement.

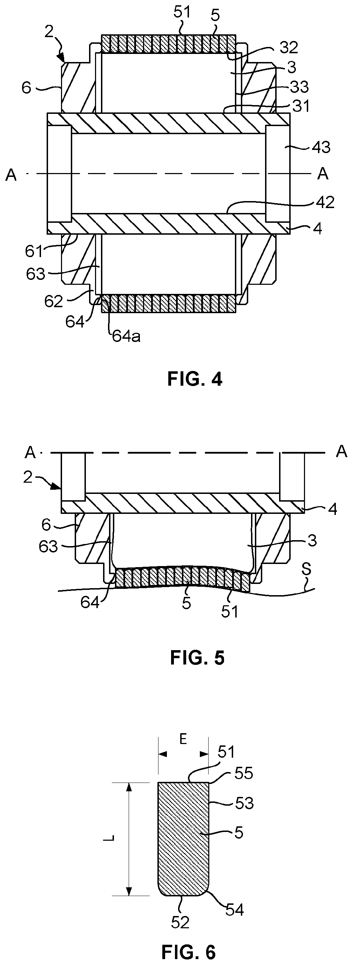

En référence à la figure 5, en cours d'utilisation, les anneaux 5 peuvent se déplacer radialement sous l'effort de compactage appliquée par la tête, de manière indépendante les uns des autres, pour s'adapter à la surface de drapage. Sous l'effet de l'effort de compactage, la pièce cylindrique 3 peut s'écraser et s'étendre latéralement, tel qu'illustré sur la figure. Le renfoncement 63 au centre de l'embase de la bague sert de logement pour recevoir la pièce cylindrique déformée. Ces renfoncements permettent d'éviter un contact entre les bagues et la pièce cylindrique et permet ainsi de limiter une détérioration de la pièce cylindrique. La distance entre le diamètre extérieur des bagues au niveau de leur embase et le diamètre extérieur des anneaux, ainsi que la dureté de la pièce cylindrique définissent le déplacement radial maximal des anneaux, et seront choisis en fonction de l'effort de compactage souhaité et la complexité de la surface de drapage.

Pour limiter une détérioration de la surface cylindrique 32 de la pièce cylindrique, la jonction entre chaque surface latérale 53 et la surface intérieure cylindrique 52 d'un anneau est effectué par un arrondi 54. Côté extérieur, pour limiter le marquage de la préforme drapée, ainsi que l'encrassement du rouleau par de la résine d'imprégnation contenue dans des fibres et/ou le blocage de filaments constitutifs des fibres entre deux anneaux adjacents, les anneaux présentent des arêtes vives 55 entre la surface extérieure cylindrique 51 et les deux surfaces latérales 53, sans chanfrein ou arrondi.

Selon une variante de réalisation, la longueur de l'empilement d'anneaux est inférieure à la longueur de la pièce cylindrique, la pièce cylindrique comprenant des portions d'extrémité positionnées dans les renfoncements des bagues, le diamètre extérieur de la pièce cylindrique étant inférieur diamètre interne des nervures périphériques annulaires de manière à maintenir un jeu entre les nervures et la pièce cylindrique.

La pièce cylindrique est par exemple constituée d'un élastomère non expansé, tel qu'un silicone ou polysiloxane, ou un polyuréthane, de préférence un silicone, par exemple un silicone bi-composant polymérisable à température ambiante. La pièce cylindrique présente une dureté de 40, 50 ou 60 shore A, qui sera choisie en fonction du taux d'écrasement souhaité du rouleau pour un effort de compactage donné, ce taux d'écrasement étant notamment défini en fonction de la complexité de la surface d'application.

Les anneaux sont métalliques, par exemple en cuivre, et chaque anneau présente une section sensiblement parallélépipédique, et se présente ici sous la forme d'une rondelle plane, avec par exemple une épaisseur E de l'ordre de 2 mm, et une largueur L d'environ 4,5 mm.

Le système de chauffage de type laser peut comprendre des diodes laser, disposées en une ou plusieurs rangées, émettant un rayonnement de longueur(s) d'onde comprise(s) entre 880 à 1030 nm par exemple, un laser à fibre optique ou un laser YAG, émettant à une longueur d'onde de l'ordre de 1060 nm.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

## Revendications

1. Tête d'application de fibres pour la réalisation de pièces en matériau composite, comprenant un système de compactage comprenant un rouleau de compactage (2) pour l'application d'une ou plusieurs fibres sur une surface (S) d'application, ledit rouleau de compactage comprenant un tube central (4) rigide par lequel ledit rouleau est monté rotatif sur une structure support de la tête, et au moins une pièce cylindrique (3) réalisée en un matériau souple, déformable élastiquement, assemblée coaxialement sur ledit tube central, **caractérisée en ce que** ledit rouleau de compactage comprend en outre une pluralité d'anneaux (5) rigides indépendants, empilés côte à côte coaxialement sur la pièce cylindrique, présentant chacun une surface cylindrique (51) extérieure par laquelle chaque anneau est destiné à venir en appui contre la surface de drapage, deux bagues (6) montées sur le tube central, de part et autre de la pièce cylindrique, étant aptes à bloquer en translation l'empilement d'anneaux sur la pièce cylindrique.

2. Tête d'application selon la revendication 1, **caractérisée en ce que** chaque bague (6) présente une nervure (64) périphérique annulaire par laquelle la bague est en appui contre la surface latérale (53) de l'anneau extérieur de l'empilement d'anneaux, ladite nervure définissant un renfoncement (63) dans lequel la pièce cylindrique (3) est apte à s'étendre lorsque ladite pièce cylindrique s'écrase sous l'effet de l'effort de compactage.

3. Tête d'application de fibres selon la revendication 1 ou 2, **caractérisée en ce que** le rouleau de compactage comprend des anneaux (5) métalliques.

4. Tête d'application de fibres selon l'une des revendications 1 à 3, **caractérisée en ce que** chaque anneau (3) présente deux surfaces latérales (53) opposées planes parallèles, avec un rapport largeur sur épaisseur (L/E) supérieur à 1, de préférence supérieur à 2.

5. Tête selon l'une des revendications 1 à 4, **caractérisée en ce que** chaque anneau (5) présente des arêtes vives (55) entre sa surface cylindrique extérieure (51) et ses surfaces latérales (53).

6. Tête selon l'une des revendications 1 à 5, **caractérisée en ce que** chaque anneau (3) présente des chanfreins ou arrondis (54) reliant sa surface cylindrique intérieure (52) et ses surfaces latérales (53) opposées.

7. Tête selon l'une des revendications 1 à 6, **caractérisée en ce que** ledit rouleau de compactage comprend une pièce cylindrique (3) en un matériau élastomère présentant une dureté comprise entre 25 shore A et 90 shore A, de préférence d'au moins 40 shore A.

8. Tête selon l'une des revendications 1 à 6, **caractérisée en ce que** le rouleau de compactage comprend une pièce cylindrique en mousse présentant une densité comprise entre 200 kg/m³ et 500 kg/m³.

9. Procédé de fabrication d'une pièce en matériau composite comprenant l'application de fibres continues sur une surface d'application, ladite application de fibres étant réalisée au moyen d'une tête d'application de fibres selon l'une des revendications 1 à 8, par déplacement relatif de la tête d'application par rapport à la surface de drapage selon des trajectoires de dépose, les fibres étant compactées lors de leur application au moyen dudit rouleau d'application.

## Patentansprüche

1. Faserapplikationskopf zur Fertigung von Teilen aus Verbundwerkstoff, umfassend ein Verdichtungssystem, das eine Verdichtungswalze (2) zur Applikation einer oder mehrerer Fasern auf einer Applikationsoberfläche (S) umfasst, wobei die Verdichtungswalze ein starres Mittelrohr (4) umfasst, anhand dessen die Walze drehend auf einer Trägerstruktur des Kopfes montiert ist, und mindestens ein zylindrisches Teil (3), das aus einem biegsamen, elastisch verformbaren Werkstoff gefertigt ist, das koaxial an dem Mittelrohr angebracht ist, **dadurch gekennzeichnet, dass** die Verdichtungswalze weiter eine Vielzahl von unabhängigen starren Ringen (5) umfasst, die koaxial Seite an Seite auf dem zylindrischen Teil gestapelt sind, die jeweils eine zylindrische Außenoberfläche (51) aufweisen, über die jeder Ring dazu bestimmt ist, sich an der Drapier-Oberfläche anzulegen, wobei zwei Ringe (6), die auf dem Mittelrohr beiderseits des zylindrischen Teils montiert sind, imstande sind, den Vorschub der Ringstapelung am zylindrischen Teil zu blockieren.

2. Applikationskopf nach Anspruch 1, **dadurch gekennzeichnet, dass** jeder Ring (6) eine ringförmige umlaufende Rippe (64) aufweist, anhand derer der Ring an der Seitenoberfläche (53) des Außenringes der Stapelung von Ringen anliegt, wobei die Rippe eine Vertiefung (63) definiert, in der das zylindrische Teil (3) imstande ist, sich zu erstrecken, wenn das zylindrische Teil unter der Einwirkung der Verdichtungskraft gequetscht wird.

3. Faserapplikationskopf nach Anspruch 1 oder 2, **dadurch gekennzeichnet, dass** die Verdichtungswalze metallische Ringe (5) umfasst.

4. Faserapplikationskopf nach einem der Ansprüche 1 bis 3, **dadurch gekennzeichnet, dass** jeder Ring (3) zwei gegenüberliegende parallele ebene Seitenoberflächen (53) mit einem Breiten-Dicken-Verhältnis (L/E) größer als 1, vorzugsweise größer als 2, aufweist.

5. Kopf nach einem der Ansprüche 1 bis 4, **dadurch gekennzeichnet, dass** jeder Ring (5) scharfe Kanten (55) zwischen seiner zylindrischen Außenoberfläche (51) und seinen Seitenoberflächen (53) aufweist.

6. Kopf nach einem der Ansprüche 1 bis 5, **dadurch gekennzeichnet, dass** jeder Ring (3) Fasen oder Rundungen (54) aufweist, die seine zylindrische Innenoberfläche (52) und seine gegenüberliegenden Seitenoberflächen (53) verbinden.

7. Kopf nach einem der Ansprüche 1 bis 6, **dadurch gekennzeichnet, dass** die Verdichtungswalze ein zylindrisches Teil (3) aus einem Elastomer-Werkstoff aufweist, der eine Härte aufweist, die zwischen 25 Shore A und 90 Shore A liegt, vorzugsweise mindestens 40 Shore A beträgt.

8. Kopf nach einem der Ansprüche 1 bis 6, **dadurch gekennzeichnet, dass** die Verdichtungswalze ein zylindrisches Teil aus Schaumstoff umfasst, der eine Dichte aufweist, die zwischen 200 kg/m³ und 500 kg/m³ liegt.

9. Verfahren zur Herstellung eines Teils aus Verbundwerkstoff, umfassend die Applikation von Endlosfasern auf einer Applikationsoberfläche, wobei die Applikation von Fasern anhand eines Faserapplikationskopfes nach einem der Ansprüche 1 bis 8, durch eine relative Verschiebung des Applikationskopfes in Bezug auf die Drapier-Oberfläche entlang von Abscheidebahnen erfolgt, wobei die Fasern bei deren Applikation anhand der Verdichtungswalze verdichtet werden.

## Claims

1. Fibre application head for producing composite material parts, comprising a compacting system comprising a compacting roller (2) for applying one or more fibres onto an application surface (S), said compacting roller comprising a rigid central tube (4) by means of which said roller is rotatably mounted on a support structure of the head, and at least one cylindrical piece (3) made of an elastically deformable flexible material, coaxially assembled on said central tube, **characterized in that** said compacting roller further comprises a plurality of independent rigid rings (5), stacked side by side coaxially on the cylindrical piece, each having an outer cylindrical surface (51) by which each ring is intended to come to bear against the lay-up surface, two collars (6) mounted on the central tube, on either side of the cylindrical piece, being able to block in translation the stack of rings on the cylindrical piece.

2. Application head according to claim 1, **characterized in that** each collar (6) has an annular peripheral rib (64) by means of which the collar bears against the lateral surface (53) of the outer ring of the stack of rings, said rib defining a recess (63) into which the cylindrical piece (3) is able to extend when said cylindrical piece collapses under the effect of the compacting force.

3. Fibre application head according to claim 1 or 2, **characterized in that** the compacting roller comprises metal rings (5).

4. Fibre application head according to one of claims 1 to 3, **characterized in that** each ring (3) has two opposite plane parallel lateral surfaces (53), with a width to thickness ratio (L/E) greater than 1, preferably greater than 2.

5. Head according to any of claims 1 to 4, **characterized in that** each ring (5) has sharp edges (55) between its outer cylindrical surface (51) and its lateral surfaces (53).

6. Head according to one of claims 1 to 5, **characterized in that** each ring (3) has chamfers or rounded edges (54) connecting its inner cylindrical surface (52) and its opposite lateral surfaces (53).

7. Head according to one of claims 1 to 6, **characterized in that** said compacting roller comprises a cylindrical piece (3) made of an elastomeric material having a hardness of between 25 shore A and 90 shore A, preferably of at least 40 shore A.

8. Head according to one of claims 1 to 6, **characterized in that** the compacting roller comprises a cylindrical piece made of foam with a density between 200 kg/m³ and 500 kg/m³.

9. Method for manufacturing a composite material part comprising the application of continuous fibres onto an application surface, said application of fibres being carried out by means of a fibre application head according to one of claims 1 to 8, by relative displacement of the application head with respect to the lay-up surface according to lay-up paths, the fibres being compacted during their application by means of said application roller.
